# EUROPEAN PATENT SPECIFICATION

(11) **EP 4 336 054 B1**
(45) Date of publication and mention of the grant of the patent: **21.01.2026**
(21) Application number: 22194848.2
(22) Date of filing: 09.09.2022
(51) Int. Cl.: F16B 5/00, F16B 5/07, F16B 3/00, F16B 11/00

(54) **CONNECTION OF A 1ST BOARD AND A 2ND BOARD**
VERBINDUNG EINER ERSTEN PLATTE MIT EINER ZWEITEN PLATTE
CONNEXION D'UNE PREMIERE PLAQUE ET D'UNE DEUXIEME PLAQUE

(43) Date of publication of application: 13.03.2024
(73) Proprietor: Flooring Technologies Ltd., Kalkara SCM 1001 (MT)
(72) Inventor: Stachów, Grzegorz, 68-200 Zary (PL)
(74) Representative: Kalkoff & Partner Patentanwälte mbB

(56) References cited:
- WO-A1-90/13402
- DE-U1- 8 809 611

## Description

The invention refers to a connection of a 1^{st} board and a 2^{nd} board made from wood or reconstituted wood and to a method of providing a set of a 1^{st} board and a 2^{nd} board for forming said connection.

Connections between boards made from wood or reconstituted wood are required to form e. g. connections between worktops or work stations which for example extend at a 90° angle. Such connections require tabletop joints like dowels, biscuits, clamping elements and / or tensioning elements exerting tension forces to provide a connection between said 1^{st} and 2^{nd} boards. Further, extensive work including tools like clamps, templates, drills, cutting and milling tools are required to manufacture such connections. An example for a connector and its implementation for providing a connection between two worktops is described e. g. in DE 37 13 483 C3 or EP 0 287 981 B1.

WO 90/13402 A1 describes a jointing of building panels and sheets.

Such connections are difficult to manufacture and they require connecting elements which need to be mounted with the help of numerous tools.

It is thus the object of the present invention to provide a connection for a 1^{st} board and a 2^{nd} board made from wood or woodworking material which is simple to manufacture. Said object is resolved with a connection according to claim 1 and a method according to claim 10.

The invention discloses a connection of a 1^{st} board and a 2^{nd} board made from wood or from reconstituted wood,
- said 1^{st} and 2^{nd} boards having a 1^{st} and a 2^{nd} surface and a thickness,
- said 1^{st} and 2^{nd} boards being arranged in a XY-plane, wherein
- said 1^{st} board comprises a tongue element protruding from an edge of said 1^{st} board and said 2^{nd} board comprises a groove element, extending from a 1^{st} edge of the 2^{nd} board into said 2^{nd} board
- said tongue element being designed to engage with said groove element, wherein
- said tongue element and groove element each comprise a first abutment area extending parallel to an X-direction and a second abutment area extending parallel to a Y-direction.

The 1^{st} and 2^{nd} board are made from wood or from reconstituted wood, e. g. from particleboard, fiberboard like medium-density fiberboard or high-density fiberboard, from plywood or Oriented Strand Board (OSB), from wood-plastic-composite material (WPC), or from other wood-containing material. Often, said boards are water resistant and usually at least one surface is coated, e.g. by laminate. Said boards having a 1^{st} and a 2^{nd} surface, said surfaces being distanced by the thickness of the 1^{st} and 2^{nd} board. Both, the 1^{st} and 2^{nd} board have preferably the same thickness, the thickness being typically between 0,5 cm and 10 cm, preferably between 2 cm and 5 cm. The 1^{st} and the 2^{nd} board typically have a length of 0,2 m to 6 m and a width of 0,2 m to 1,5 m.

Said 1^{st} and 2^{nd} board each extend in an XY-plane and they shall be connected in a way to extend in said XY-plane. The 1^{st} board extends in an X-direction which is defined by a X-axis extending along the length of the board. The 2^{nd} board extends in a Y-direction which is defined by a Y-axis extending along the length of the 2^{nd} board. The width of the 1^{st} and 2^{nd} board, respectively, is shorter than the length of the board. Typically, the 1^{st} and 2^{nd} board are designed for worktops, e. g. for a kitchen, for a workspace or for a laboratory. It is possible to form the connection according to the invention on edges of the same direction of the 1^{st} and the 2^{nd} board. More often, the connection will be formed on a long side of one board and on a short side of the other board, thereby forming an angle between the 1^{st} and the 2^{nd} board, i. e. between the x-axis and the y-axis. Within the XY-plane, therefore, the connection according to the invention between the 1^{st} and 2^{nd} board can be manufactured at any angle, for example any angle between 0° and 180°, typically 90°, 60 ° or 45°. An angle of 0° or 180° requires that the 1^{st} and the 2^{nd} board share a connection in X-direction or Y-direction.

While a set of boards may comprise two or more boards, a connection is always formed between a 1^{st} and a 2^{nd} type of board. Thus, a set of boards to be connected comprises e.g. three boards to be connected to form one worktop with two open ends, at least one board of the set has a tongue profile on one part and a groove profile at another part. If, however, a set of two or more boards shall form a closed, ring-like worktop, each board needs to show a tongue profile at a first part and a groove profile at a second part of each board.

While the connection between the 1^{st} and the 2^{nd} board may be supported by e.g., furniture elements arranged below the connection, it is preferred that the connection is self-supporting. The self-supporting connection does not need any support underneath. The self-supporting connection is typically able to withstand a load of up to 80 kg placed upon the connection, e. g. a connection formed on a 4 cm particle board with a laminated surface typically used for kitchen worktops. A self-supporting connection allows a greater freedom in constructing worktops because furniture elements can be arranged as required but not according to the need to support the worktop below a connection of two boards.

To build the connection according to the invention, the 1^{st} board comprises a tongue element protruding from an edge of the 1^{st} board and a groove element extending from a 1^{st} edge of the 2^{nd} board into said 2^{nd} board. The material of the 1^{st} board laterally and above, i.e. between the tongue and the 1^{st} surface, is removed entirely. To create the groove element, material of the 2^{nd} board is removed starting from the 2^{nd} surface of the 2^{nd} board but leaving the 1^{st} surface of the 2^{nd} board intact. The tongue element is designed to engage with the groove element, preferably to engage form-fittingly. The tongue and groove element are designed to form a link securing the 1^{st} and the 2^{nd} board against movement in the X-direction and the Y-direction. To this end, said tongue element and said groove element each comprise a first abutment area extending parallel to the X-direction and a second abutment area extending parallel to the Y-direction. The first and second abutment areas are arranged at a distance to the edge of the board on which the respective tongue or groove element has been arranged. The distance between the respective edge and the 1^{st} or 2^{nd} abutment area may be for example between 0,5 cm and 10 cm. The 1^{st} and the 2^{nd} board are placed adjacent to each other in at least the first and the second abutment area and preferably are brought into an at least partly form-fitted link by the tongue-and-groove element. Thereby, the tongue-and-groove elements will secure the 1^{st} and the 2^{nd} board against a movement into the X-direction or the Y-direction. In a preferred embodiment, the tongue element and the groove element each comprise a bottleneck part and a wide part with the wide part comprising the first abutment area and the bottleneck part comprising the second abutment area. Usually, the second abutment area is closer to the edge of the board than the first abutment area. Preferably, a plurality of tongue-and-groove elements are arranged along the edges of the 1^{st} and 2^{nd} board to be joined by the connection. Usually, over a length of 1m, three to seven tongue-and-groove elements are arranged to form a link between the 1^{st} and the 2^{nd} board. According to a basic embodiment of the invention, form-fitting tongue and groove elements form the connection as they prevent movement of the 1^{st} and 2^{nd} board in the X direction and Y direction and as they prevent movement in the Z direction due to friction and the weight of the 2^{nd} board which covers the tongue element. The Z direction extends parallel to a Z axis which extends perpendicular to the XY-plane.

While the tongue element and the groove element may extend over the entire thickness of the 1^{st} and the 2^{nd} board, it is preferred that the tongue element and the groove element extend from the 2^{nd} surface over 15% to 85 % of the thickness of the 1^{st} or 2^{nd} board, respectively. It is preferred that the tongue element and the groove element have the same thickness.

While the tongue element and the groove element are preferably form-fitting in at least part of the first and the second abutment area, they do not need to be form-fitting entirely as long as the groove element is sufficiently large to accommodate the tongue element.

The set of boards linked by the connection according to the invention is typically arranged with the 1^{st} surface on top. However, it is of course possible to arrange the set of boards linked by the connection with the 2^{nd} surface on top, for example if the contours of the tongue and groove shall form part of the design of the worktop.

However, preferably the connection according to the invention is formed by the tongue-and-groove element and by glue which is inserted between the 1^{st} and 2^{nd} board, preferably between at least part of the tongue-and-groove element. Glue ensures that the 1^{st} and the 2^{nd} board will be fixed in Z-direction and it strengthens the connection. Glue also adds to the strength of the connection and allows the connection to be self-supporting even under a heavy load of e. g. up to 80 kg for example if a 4 cm thick particle board with a laminate surface or a 4 cm wooden board is used for the set of boards. Glue is preferably applied the entire length of the connection, thereby also improving the water-resistance of the connection. Typical types of glue are those which provide temperature resistance and water resistance class D3 according to EN 204-D3. At typical D3 glue is e. g. an aqueous dispersion of polyvinyl acetate.

A preferred embodiment of the connection according to the invention comprises a third abutment area on each of the 1^{st} and the 2^{nd} board, said third abutment area extending from above the tongue-and-groove element to the 1^{st} surface. The 1^{st} surface is the upper surface of e. g. the worktop to be formed by the 1^{st} and the 2^{nd} board. The third abutment area is preferably formed by straight adjacent edges of the 1^{st} and the 2^{nd} board, e. g. of an edge in X-direction and an edge in Y-direction of the boards, respectively. According to a further preferred embodiment of the connection, the 2^{nd} board shows a groove which extends from the 2^{nd} surface which is opposed to the 1^{st} surface into part of the thickness of the 2^{nd} board and from the edge of the 2^{nd} board into the 2^{nd} board. Above the groove, the edge of the 2^{nd} board extends to the 1^{st} surface, thereby forming a third abutment area on the 2^{nd} board. The tongue element protrudes from the edge of the 1^{st} board and extends from the 2^{nd} surface into the thickness of the 1^{st} board. Above the tongue element, the edge of the 1^{st} board rises to the 1^{st} surface and thereby forms the third abutment area on the 1^{st} board. While the third abutment area may take any form, it is preferred that it forms a straight line on the 1^{st} surface once the 1^{st} and the 2^{nd} board are joined.

A further preferred embodiment has glue applied between the 1^{st} and 2^{nd} board at least partly in the third abutment area. Glue can be applied there easily and a minimum of glue allows for creating a connection between the 1^{st} and the 2^{nd} board which is preferably self-supporting and water-resistant. In order to achieve maximum strength and water-resistance, glue can be applied on all abutment areas.

The invention further comprises a method of providing a set of a 1^{st} and a 2^{nd} board for forming a connection between said 1^{st} and 2^{nd} boards, said 1^{st} and 2^{nd} boards being made from wood or reconstituted wood and having a thickness and a 1^{st} surface and 2^{nd} surface, said 1^{st} and 2^{nd} surfaces extending in a XY-plane and wherein
- at a work site a tongue element is created on a 1^{st} edge of the 1^{st} board, said groove element protruding from the 1st board,
- a groove element is worked into the 2^{nd} board, extending from a 1^{st} edge of the 2^{nd} board into said 2^{nd} board, said groove element extending from a 2^{nd} surface over part of the thickness of the 1^{st} and 2^{nd} boards, wherein
- said tongue element is designed to engage with said groove element, wherein
- said tongue element and groove element each comprise a first abutment area extending parallel to an X-axis and a second abutment area extending parallel to an Y-axis,
- said 1^{st} and 2^{nd} boards comprising tongue and groove elements are being delivered to a mounting site and wherein
- the boards are glued together at the mounting site.

The 1^{st} and the 2^{nd} board of the set according to claim 1 have been describe above in detail as well as manufacturing the tongue element and the groove element and the application of glue to the 1^{st} board and the 2^{nd} board. However, while it is possible to manufacture the tongue and groove at the mounting site, this approach requires extensive use of a number of tools which is cumbersome. Further, noise and sawdust occur on the mounting site.

The inventors found that it is much preferable to prepare the 1^{st} board and the 2^{nd} board at a work site preferably with professional tools and further preferable with a control unit directing the tools to create a fitting tongue and groove on the 1^{st} and the 2^{nd} board, respectively. The manufacture of tongue and groove can be executed much more precisely with professional, preferably stationary tools which are directed by a control unit. The set of 1^{st} and 2^{nd} board can be cut to length and the tongue and groove element can be worked into an edge of the respective 1^{st} or 2^{nd} board thereby rendering the set of boards ready for mounting.

Said control unit comprises a data storage containing information about the shape and measurements of the tongue and the groove to be tooled depending on the dimensions and angle of the 1^{st} and the 2^{nd} board to be joined.

When this information is made available, the control unit will calculate the dimensions and the number of tongue and groove elements to be manufactured on the 1^{st} and 2^{nd} boards including a calculation of the layout of the first and second abutment areas. The control unit will then be able to tool the 1^{st} board and the 2^{nd} board parallel or successively. The control unit and the tool or the tools including cutting and milling tools may be a CNC-machine (computer numerically controlled machine).

Once the set of 1^{st} and 2^{nd} board is provided with tongue and groove elements, respectively, and preferably cut to length, the set can be shipped to the mounting site either together with the required glue or with an instruction which glue to apply to the boards. At the mounting site, glue can be applied according to instruction and the 1^{st} and the 2^{nd} board can be joined by putting the 1^{st} board into its final position and by arranging the 2^{nd} board in its final position or almost in its final position with the part comprising the groove held above the tongue element and then lowering the 2^{nd} board thereby bringing tongue and groove into engagement. If required, some lateral movement of the 2^{nd} board will bring the tongue and groove elements in alignment in the XY-plane. In a simple embodiment of the invention, the connection between the 1^{st} and the 2^{nd} board is established. According to a preferable embodiment of the invention, glue is applied to at least part of the tongue and groove elements and will then fill space between the 1^{st} and the 2^{nd} board at least partly. Preferably, the glue will fill the space between the 1^{st} and the 2^{nd} board completely at least with regard to the 1^{st} surface, thus providing a watertight surface. Surplus glue should be wiped off.

Thus, mounting of the set of the 1^{st} and the 2^{nd} board can be done without any tools at the mounting site as the glue can be applied manually. It is considered an essential advantage of the connection and the method of the invention that mounting can be performed without the aid of tools and that no additional means for fixing the 1^{st} board to the 2^{nd} board are required. No noise or sawdust occurs at the mounting site which is especially preferred if a worktop is replaced in an already furnished room.

All features of the connection and of the method according to the invention disclosed herein can be individually combined with each other.

Below, an embodiment is described showing elements of the invention.
- Fig. 1a: shows a set of a 1^{st} board and a 2^{nd} board, said boards being prepared for making a connection according to the invention, said set being shown in a side view and
- Fig. 1b: shows a set of a 1^{st} board and a 2^{nd} board, said boards being prepared for making a connection according to the invention, said set being shown in a view from below.
- Fig. 2: shows various tongue profiles of a 1^{st} board.

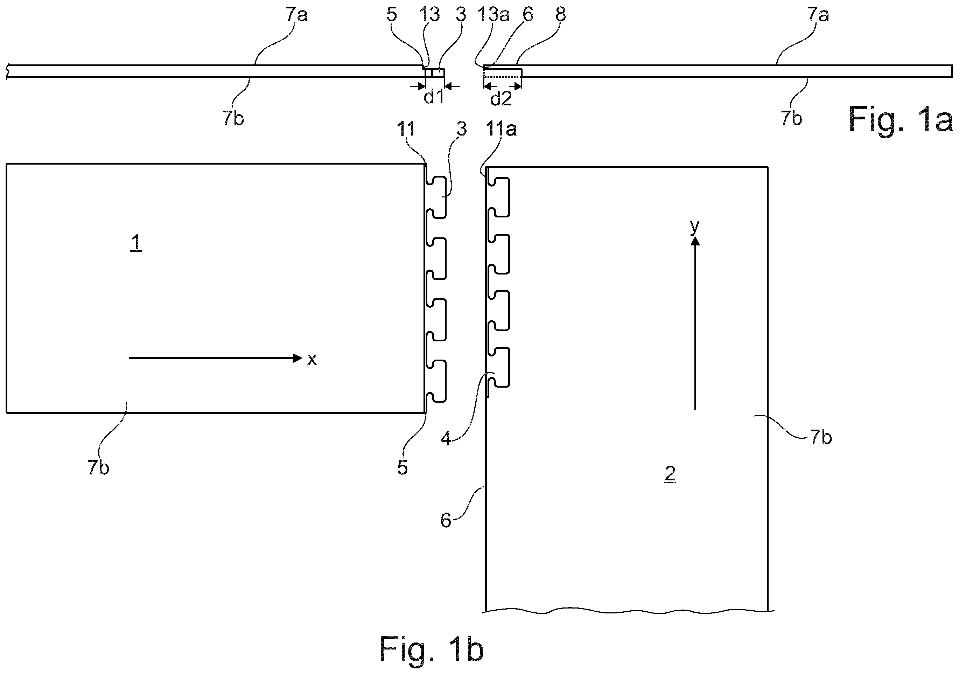

Fig.1a and Fig. 1b show a 1^{st} board 1 and a 2^{nd} board 2 which form a set of boards. The boards 1, 2 may have any shape but in this embodiment, they are rectangular and elongated, each showing a short edge and a long edge, the dimensions being e. g. 4 m x 0,6 m length x width. The boards 1, 2 can be made from any type of wood or woodworking material but in this embodiment are made from particleboard with a laminated surface having a thickness of 45 mm.

A connection shall be formed between this set of boards 1, 2 that provides a smooth, even surface 7a of the worktop to be built from this set of boards 1, 2. To this end, the 1^{st} board 1 shows four tongues 3 and the 2^{nd} board 2 shows corresponding grooves 4. The tongues 3 extend from a 1^{st} edge 5 of the 1^{st} board, said edge 5 running across the width of the board 1 in the embodiment according to Fig. 1b. The grooves 4 have been worked into a 1^{st} edge 6 of the 2^{nd} board 2, said edge 6 running parallel to a Y-axis in the embodiment according to Fig. 1b. The Y-axis is oriented parallel to the length of the 2^{nd} board. The boards 1, 2 have a 1^{st} surface 7a which forms the upper side of the worktop to be provided by the set of boards 1, 2. The boards 1, 2 have a lower side 7b which forms the underside of the worktop to be provided by the set of boards 1, 2. However, in another embodiment, the surface 7b may form the upper side of the worktop and the surface 7a may form the lower side of the worktop.

The tongues 3 extend from the lower surface 7b over part of the thickness of the board 1. While the tongue may extend over 15% to 85% of the thickness of the board towards the 1^{st} surface, the present embodiment shows a tongue extending from the 2^{nd} surface 7b towards the 1^{st} surface 7a over 70% of the thickness of the board. The tongues 3 have been created by removing, e. g. by cutting and milling all material other than the tongues 3 of the board 1 over the entire thickness of the board 1. The tongues 3 thus extend from the board 1 over a distance d1 to the edge 5 and are freely accessible from the direction of the 1^{st} surface 7a.

The grooves 4 extend from the 2^{nd} surface 7b over part of the thickness of the 2^{nd} board. The grooves 4 extend from the 2^{nd} surface 7b towards the 1^{st} surface 7a to at least the same extent as the tongues, thereby ensuring an even surface of the worktop to be provided by the set of boards 1, 2. The grooves 4 may be worked deeper into the thickness of the 2^{nd} board, i. e. minimally closer to the 1^{st} surface 7a, e. g. 0,5 mm deeper, to allow for glue to be inserted between tongues 3 and grooves 4. A groove 4 may be created by milling.

Other than for the grooves, the material of the 2^{nd} board between the grooves 4 and between the grooves 4 and the 1^{st} surface 7a remains as a groove cover 8. Said groove cover 8 extends to the 1^{st} edge of the 2^{nd} board with an uninterrupted 1^{st} surface 7a. The groove cover 8 contributes significantly to the strength of the connection according to the invention.

The tongues 3 extend over a distance d1 from the edge 5 of board 1 and the grooves 4 extend over a distance d2 from the edge 6 into the board 2, the distance d2 being equal or greater than the distance d1 thus allowing either for a tight fitting of tongue 3 and groove 3 or for the insertion of glue and / or easier fitting of tongue and groove.

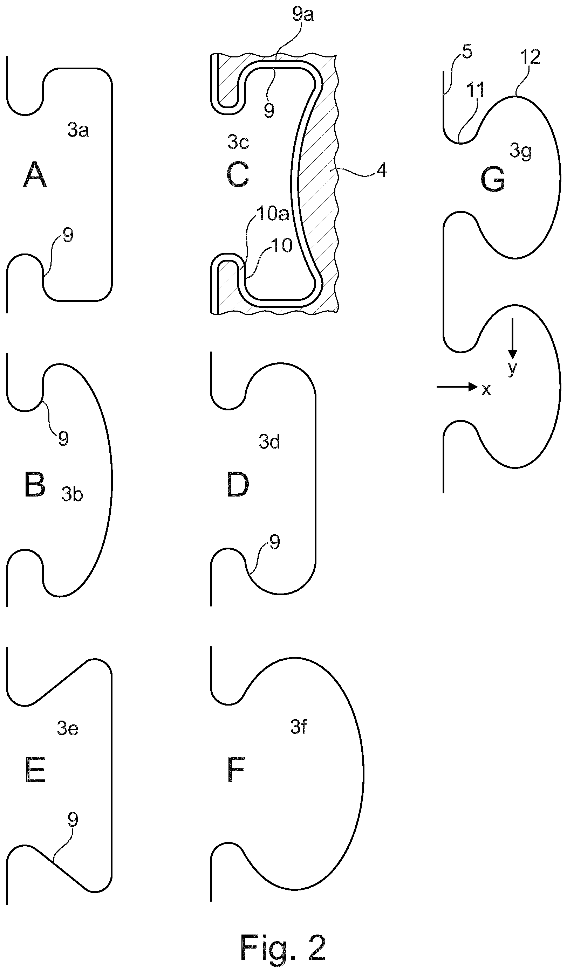

As shown in detail in Fig. 2, a tongue 3 shows a first abutment area 9 parallel to an X axis, thereby preventing a movement of board 1 in relation to board 2 in the X direction. A tongue 3 shows further a second abutment area 10 parallel to an Y axis, thereby preventing a movement of board 1 in relation to board 2 in the Y direction. The groove 4 shows corresponding abutment areas 9a and 10a as shown in Fig. 2. The abutment areas 9, 9a and 10, 10a do not need to be extensive. The abutment areas 9, 9a and 10, 10a can be minimal areas but the define the position of the 1^{st} board 1 and the 2^{nd} board 2 in the XY plane defined by the X-axis and the Y axis. The X-axis and the Y-axis typically extend parallel to the length of the 1^{st} and 2^{nd} boards 1, 2.

Fig. 2 shows typical embodiments of tongues 3a to 3g, all of which have a bottleneck area 11 close to the edge 5 and a wider area 12 which is distanced from the edge 5. The groove 4 is designed as a mirror image (not shown) having a bottleneck area close to the edge 6 and a wider area further into the board 2. Preferably, the first abutment area 9 is placed on the wider area 12 of the tongue 3 and the second abutment area 10 is place on the bottleneck area of the tongue 3. Abutment areas 9a and 10a are placed accordingly on the bottleneck area and wider area of the groove 4.

The tongue 3 and the groove 4 are formed such that the abutment areas 9, 9a and 10, 10a are either in immediate contact or that they are minimally spaced from each other, e. g. by 0,1 mm to 0,5 mm to create a space for the application of glue. The connection formed by the tongue 3 and the groove 4 is preferably guarded against a relative movement between the 1^{st} and the 2^{nd} board 1, 2 in a Z direction, the Z-axis (not shown in Fig. 1, 2) being perpendicular to the XY plane. While the 1^{st} board and the 2^{nd} board may be secured in a Z direction simply by friction and the weight of the 2^{nd} board, it is preferred that glue be applied at least to the first and second abutment areas 9, 9a and 10, 10a in order to prevent any movement between the 1^{st} and the 2^{nd} board 1, 2.

Fig. 1b shows a third abutment area 13 on the 1^{st} board 1 and a corresponding third abutment area 13a on the 2^{nd} board 2. The third abutment area is optional but is shown in the embodiment of Fig. 1. The third abutment area 13 is on the 1^{st} board 1 at the edge 5 of the tongue 3 and above the tongue 3 at the 1^{st} surface 7a. The corresponding abutment area 13a is on the 2^{nd} board 2 at the edge 6 of the groove cover 8 on the 1^{st} surface 7a. After joining the boards 1, 2 and forming the connection according to the invention, third abutment areas 11, 11a are positioned adjacent to each other, thereby forming a clean joint usually shaped as a line. According to a preferred embodiment, the third abutment areas 11, 11a are minimally distanced from each other, e. g. 0,1 mm to 0,5 mm. This spaced arrangement of the third abutment area 11, 11a allows for the application of glue. The application of glue, e. g. of an aqueous dispersion of polyvinyl acetate, in the third abutment area secures against a movement of the 1^{st} and 2^{nd} board 1, 2 relative to each other in the Z direction but it also provides a seal against liquids penetrating into the connection. In addition, said glue is temperature resistant which is relevant for a worktop which is used in a kitchen or laboratory.

To build the connection according to the invention, the 1^{st} board 1 is placed in its final position. The 2^{nd} board 2 is then placed in its final position, too or at least close to the final position regarding to the length and/or the width of the 2^{nd} board but at least the part of the 2n board 2 is held in a higher position than the 1^{st} board 1. The grooves 4 of the 2^{nd} board 2 are aligned above the tongues 3 of board 1 and the 2^{nd} board 2 is lowered until the grooves 4 engage with the tongues 3. The cover area 8 covers the tongues 3, thereby forming a worktop of the set of boards 1 and 2 which is only broken by a line in the 1^{st} surface 7a. The surface 7a of the worktop is even and no relative movement in the XY-plane can be observed.

The worktop is mounted preferably by applying glue to at least part of the tongues 3 and the grooves 4, preferably to the abutment areas. It is especially preferred that glue be applied to the entire area of contact between tongue 3 and groove 4 including the abutment areas 9, 9a, 10, 10a, 13 and 13a. However, in a basic version, the connection can be mounted without applying glue.

Movement in the Z-direction is prevented by friction between the first and second abutment areas 9, 9a and 10, 10a and optionally between the third abutment are 11, 11a and the weight of the 2^{nd} board. According to a preferred embodiment of the connection according to the invention, movement in the Z-direction is prevented by the application of glue between the 1^{st} and the 2^{nd} board 1, 2, preferably in the first and second abutment areas 9, 9a and 10, 10a. In another embodiment of the connection, glue is applied in the third abutment area 11, 11a. In a further embodiment of the connection, glue is applied to the entire area of contact between the 1^{st} and the 2^{nd} board 1, 2.

The invention also refers to a method of providing a set of boards 1, 2 for forming a connection between said 1^{st} and 2^{nd} boards 1, 2. The boards 1, 2 being made of wood or reconstituted wood, e. g. particle board or fiberboard, have a thickness and a 1^{st} and a 2^{nd} surface 7a, 7b. Said 1^{st} and 2^{nd} surfaces 7a, 7b extend in or parallel to a XY-plane.

Said method comprises working at least one tongue 3 into the 1^{st} board and at least one groove 4 into the 2^{nd} board according to the disclosure given-above with regard to Figs 1a, 1b and 2. The at least one tongue 3 and the at least one groove 4 are created at a work site, e. g. at a plant, a Do-It-Yourself-Shop, a hardware store, at a carpenter's shop or at any other workshop that is equipped with the required tools for working the set of boards, e. g. with cutting and milling tools. Preferably, the work site is further equipped with a control unit to control the tools, e. g. a computerized numerical control (CNC-unit). According to a further preferred embodiment of the method according to the invention, a data storage of the control unit stores the required data to direct the tools to manufacture one or more tongue 3 and groove 4 on the 1^{st} and 2^{nd} board, respectively. The data stored in the data storage allow preferably for a selection among at least two shapes of tongue 3 and corresponding groove 4**,** e. g. as shown in Fig. 2, thereby allowing to select the shapes best suited e. g. to a specific type of board of wood or reconstituted wood. The data stored in the data storage preferably allows for selecting the shapes best suited for the angle between the 1^{st} and 2^{nd} board 1, 2, which may be any angle between 0° and 180° but is most often between 45° and 135°, typically 90°.

Often, a screen is provided to select the type of tongue 3 and corresponding groove 4 from among the data stored in the data storage.

According to an improved embodiment of the method according to the invention, a data processor is connected to the data storage, the data storage providing information to the data processor which will calculate the optimum size and shape of the tongue 3 and the corresponding groove 4 depending on the material of the boards 1, 2, the thickness of the boards 1, 2, the desired stability of the connection between the 1^{st} and the 2nd board 1, 2 and the amount -if any- and the type of glue to be used to mount said connection. The optimum size and shape of the tongue 3 and the groove 4 may be further guided by a desire to minimize waste of material and/or use of the tools. The control unit will then select and direct the tools to create at least one tongue 3 and one groove 4, respectively. The advantage of creating the tongue(s) 3 and groove(s) 4 at a work site is that the tongue(s) 3 and groove(s) 4 can be created individually and with professional precision. No tools need to be transported and no waste or sawdust is created at a mounting site which is apart from the work site. No machine noise occurs at the mounting site.

The set of boards 1, 2 upon which tongue(s) 3 and groove(s) 4 have been formed is the transported to the mounting site, preferably with an amount of glue sufficient to fix the 1^{st} board and the 2^{nd} board in a Z-direction and/or to seal the space between the 1^{st} and the 2^{nd} board to prevent infiltration of liquids.

The 1^{st} and 2^{nd} boards can be cut to length either at the work site or at the mounting site.

It has to be emphasized that the connection between the 1^{st} and the 2^{nd} board 1, 2 is mounted by simply lowering the board 2 on which the groove(s) 4 have been formed down onto the board 1 on which the tongue(s) 3 have been formed. No further means to secure the connection are required, e. g. no biscuits, clamps, screws or other tensioning means. This holds true especially if the connection is stabilized with glue. The connection is a cantilever construction of considerable strength. A cantilever connection formed on a set of boards made from 4 cm particle board with a laminated surface or from 4 cm laminated wood can bear a weight of 80 kg.

### List of reference signs

- 1: 1^{st} board
- 2: 2^{nd} board
- 3: tongue
- 3a-3g: tongue embodiments
- 4: groove
- 5: 1^{st} edge of 1^{st} board
- 6: 1^{st} edge of 2^{nd} board
- 7: 1^{st} surface of the 1^{st} and 2^{nd} board
- 8: groove cover
- 9: first abutment area on the tongue 3
- 9a: first abutment area on the groove 4
- 10: second abutment area on the tongue 3
- 10a: second abutment area on the groove 4
- 11: bottleneck area
- 12: wider area
- 13: third abutment area on the 1^{st} board 1
- 13a: third abutment area on the 2^{nd} board 2

- x-: axis
- y-: axis
- z-: axis
- xy-: plane

## Claims

1. Connection of a 1^{st} board (1) and a 2^{nd} board (2) made from wood or from reconstituted wood,
- said 1^{st} and 2^{nd} boards (1, 2) having a 1^{st} and a 2^{nd} surface (7a, 7b) and a thickness,
- said 1^{st} and 2^{nd} boards (1, 2) being arranged in a XY-plane, wherein
- said 1^{st} board (1) comprises a tongue element (3) protruding from an edge (5) of said 1^{st} board and said 2^{nd} board (2) comprises a groove element (4), extending from a 1^{st} edge (6) of the 2^{nd} board (2) into said 2^{nd} board
- said tongue element (3) being designed to engage with said groove element wherein
- said tongue element (3) and groove element (4) each comprise a first abutment area (9, 9a) extending parallel to an X-direction and a second abutment area (10, 10a) extending parallel to a Y-direction,
**characterised in that** a groove cover (8) extends between the groove (4) and the 1^{st} surface of the 2^{nd} board (7).

2. Connection according to claim 1, wherein glue is applied between the 1^{st} board (1) and 2^{nd} board (2).

3. Connection according to claim 1, wherein the tongue (3) and the groove (4) each extend over part of the thickness of the 1^{st} board (1) and 2^{nd} board (2) and wherein a third abutment area (11, 11a) of the 1^{st} board (1) and the 2^{nd} board (2), respectively, extends from above the tongue and groove elements (3, 4) to the 1^{st} surface (7a).

4. Connection according to claim 3, wherein glue is applied between the 1^{st} and the 2^{nd} board (1, 2) at least in the third abutment area (13, 13a).

5. Connection according to any of the preceding claims, wherein glue is applied at least between the tongue and groove elements (3, 4).

6. Connection according to any of the preceding claims, wherein a plurality of tongue elements (3) and groove elements (4) form the connection between 1^{st} and 2^{nd} board (1, 2).

7. Connection according to any of the preceding claims, wherein the tongue and groove elements (3, 4) extend across at least 15% up to 85% of the thickness of the 1^{st} and 2^{nd} boards (1, 2).

8. Connection according to any of the preceding claims, wherein the tongue and groove elements (3, 4) each comprise a bottleneck area (11) and a wide area (12) with the wide area (12) comprising the first abutment area (9, 9a) and the bottleneck part comprising the second abutment area (10, 10a).

9. Method of providing a set of a 1^{st} and a 2^{nd} board (1, 2) for forming a connection between said 1^{st} and 2^{nd} boards, said 1^{st} and 2^{nd} boards being made from wood or reconstituted wood and having a thickness and a 1^{st} surface and 2^{nd} surface (7a, 7b), said 1^{st} and 2^{nd} surfaces extending in a XY-plane and wherein
- at a work site a tongue element (3) is created on a 1^{st} edge (5) of the 1^{st} board (1), said tongue element (3) protruding from the 1st board (1),
- a groove element (4) is worked into the 2^{nd} board (2), extending from a 1^{st} edge (6) of the 2^{nd} board into said 2^{nd} board but leaving the 1^{st} surface of the 2^{nd} board intact, said tongue and groove elements (3, 4) extending from a 2^{nd} surface (7b) over part of the thickness of the 1^{st} and 2^{nd} boards (1, 2), wherein
- said tongue element (3) is designed to engage with said groove element (4), wherein
- said tongue element (3) and groove element (4) each comprise a first abutment area (9, 9a) extending parallel to an X-axis and a second abutment area (10, 10a) extending parallel to a Y-axis,
- said 1^{st} and 2^{nd} boards (1, 2) comprising a tongue and a groove element (3, 4) are being delivered to a mounting site and wherein the boards are glued together at the mounting site.

10. Method according to claim 9 wherein glue is provided together with the set comprising the 1^{st} and 2^{nd} board (1, 2).

11. Method according to claim 9 or 10 wherein glue is applied at least in the third abutment area (11, 11a).

12. Method according to one of claims 9-11 wherein glue is applied at least in the first and second abutment areas (9, 9a; 10, 10a).

13. Method according to one of claims 9-12 wherein the 1^{st} board and the 2^{nd} board (1, 2) of the set are joined by arranging the groove element (4) of the 2^{nd} board above the tongue element (3) of the 1^{st} board (1) followed by lowering the 2^{nd} board (2) until tongue and groove elements (3, 4) are in engagement and the 1^{st} board (1) and the 2^{nd} board (2) are aligned in the XY-plane.

## Patentansprüche

1. Verbindung einer ersten Platte (1) und einer zweiten Platte (2) aus Holz oder Holzwerkstoff,
- wobei die erste und die zweite Platte (1, 2) eine erste und eine zweite Oberfläche (7a, 7b) und eine Dicke aufweisen,
- wobei die erste und die zweite Platte (1, 2) in einer XY-Ebene angeordnet sind, wobei
- die erste Platte (1) eine von einer Kante (5) der ersten Platte vorstehende Feder (3) aufweist und die zweite Platte (2) ein Nutelement (4) aufweist, das sich von einer ersten Kante (6) der zweiten Platte (2) in die zweite Platte erstreckt
- wobei das Federelement (3) so ausgebildet ist, dass es in das Nutelement eingreift, wobei
- das Federelement (3) und das Nutelement (4) jeweils einen ersten Anlagebereich (9, 9a), der sich parallel zu einer X-Richtung erstreckt, und einen zweiten Anlagebereich (10, 10a), der sich parallel zu einer Y-Richtung erstreckt, aufweisen
**dadurch gekennzeichnet, dass** sich eine Nutabdeckung (8) zwischen der Nut (4) und der ersten Oberfläche der zweiten Platte (7) erstreckt.

2. Verbindung gemäß Anspruch 1, wobei Klebstoff zwischen der ersten Platte (1) und der zweiten Platte (2) aufgetragen wird.

3. Verbindung gemäß Anspruch 1, wobei sich die Feder (3) und die Nut (4) jeweils über einen Teil der Dicke der ersten Platte (1) und der zweiten Platte (2) erstrecken und wobei sich ein dritter Anlagebereich (11, 11a) der ersten Platte (1) bzw. der zweiten Platte (2) von oberhalb der Nut- und Federelemente (3, 4) bis zur ersten Oberfläche(7a) erstreckt.

4. Verbindung gemäß Anspruch 3, wobei Klebstoff zwischen der ersten und der zweiten Platte (1, 2) zumindest im dritten Anlagebereich (13, 13a) aufgetragen ist.

5. Verbindung nach einem der vorstehenden Ansprüche, wobei Klebstoff zumindest zwischen den Nut- und Federelementen (3, 4) aufgetragen wird.

6. Verbindung nach einem der vorstehenden Ansprüche, wobei eine Vielzahl von Federelementen (3) und Nutelementen (4) die Verbindung zwischen der ersten und der zweiten Platte (1, 2) bilden.

7. Verbindung nach einem der vorstehenden Ansprüche, wobei sich die Nut- und Federelemente (3, 4) über mindestens 15 % bis zu 85 % der Dicke der ersten und zweiten Platte (1, 2) erstrecken.

8. Verbindung nach einem der vorstehenden Ansprüche, wobei die Feder- und Nut-Elemente (3, 4) jeweils eine Engstelle (11) und einen breiten Bereich (12) umfassen, wobei der breite Bereich (12) den ersten Anlagebereich (9, 9a) und die Engstelle den zweiten Anlagebereich (10, 10a) umfasst.

9. Verfahren zum Bereitstellen eines Satzes aus einer ersten und einer zweiten Platte (1, 2) zum Herstellen einer Verbindung zwischen der ersten und der zweiten Platte, wobei die erste und die zweite Platte aus Holz oder Holzwerkstoff hergestellt sind und eine Dicke sowie eine erste Oberfläche und eine zweite Oberfläche (7a, 7b) aufweisen, wobei sich die erste und die zweite Oberfläche in einer XY-Ebene erstrecken und wobei
- werkseitig an einer ersten Kante (5) der ersten Platte (1) ein Federelement (3) ausgebildet wird, wobei das Federelement (3) aus der ersten Platte (1) herausragt.
- in die zweite Platte (2) wird ein Nutelement (4) eingearbeitet, das sich von einer ersten Kante (6) der zweiten Platte in die zweite Platte erstreckt, jedoch die erste Oberfläche der zweiten Platte unberührt lässt, wobei sich die Nut- und Federelemente (3, 4) von einer zweiten Oberfläche (7b) über einen Teil der Dicke der ersten und zweiten Platte (1, 2) erstrecken, wobei
- das Nutelement (3) so ausgebildet ist, dass es mit dem Nutelement (4) in Eingriff kommt, wobei
- das Federelement (3) und das Nutelement (4) jeweils einen ersten Anlagebereich (9, 9a), der sich parallel zu einer X-Achse erstreckt, und einen zweiten Anlagebereich (10, 10a) aufweisen, der sich parallel zu einer Y-Achse erstreckt,
- wobei die erste und zweite Platte (1, 2) mit einem Nut- und einem Federelement (3, 4) an einen Montageort geliefert werden und wobei die Platten am Montageort miteinander verklebt werden.

10. Verfahren nach Anspruch 9, wobei Klebstoff zusammen mit dem Satz bereitgestellt wird, der die erste und zweite Platte (1, 2) umfasst.

11. Verfahren nach Anspruch 9 oder 10, wobei Klebstoff zumindest im dritten Anlagebereich (11, 11a) aufgetragen wird.

12. Verfahren nach einem der Ansprüche 9 bis 11, wobei Klebstoff zumindest im ersten und zweiten Anlagebereich (9, 9a; 10, 10a) aufgetragen wird.

13. Verfahren gemäß einem der Ansprüche 9 bis 12, bei dem die erste Platte und die zweite Platte(1, 2) des Satzes miteinander verbunden werden, indem das Nutelement (4) der zweiten Platte über dem Federelement (3) der ersten Platte (1) angeordnet wird, gefolgt vom Absenken der zweiten Platte (2) bis die Nut- und Federelemente (3, 4) in Eingriff stehen und die erste Platte (1) und die zweite Platte (2) in der XY-Ebene ausgerichtet sind.

## Revendications

1. Connexion d'une première plaque (1) et d'une deuxième plaque (2) en bois ou en matériau dérivé du bois,
- lesdites première et deuxième plaques (1, 2) ayant une première et une deuxième surface (7a, 7b) et une épaisseur,
- lesdites première et deuxième plaques (1, 2) étant disposées dans un niveau XY, dans lequel
- ladite première plaque (1) comprend un élément de languette (3) faisant saillie à partir d'un bord (5) de ladite première plaque et ladite deuxième plaque (2) comprend un élément de rainure (4), s'étendant à partir d'un premier bord (6) de la deuxième plaque (2) dans ladite deuxième plaque
- ledit élément en languette (3) étant conçu pour s'engager avec ledit élément en rainure, dans lequel
- ledit élément de languette (3) et ledit élément de rainure (4) comprennent chacun une première zone d'aboutement (9, 9a) s'étendant parallèlement à une direction X et une deuxième zone d'aboutement (10, 10a) s'étendant parallèlement à une direction Y,
**caractérisé en ce qu'**un couvercle de rainure (8) s'étend entre la rainure (4) et la première surface de la deuxième plaque (7).

2. Connexion selon la revendication 1, dans laquelle de la colle est appliquée entre la première plaque (1) et la deuxième plaque (2).

3. Connexion selon la revendication 1, dans laquelle la languette (3) et la rainure (4) s'étendent chacune sur une partie de l'épaisseur de la première plaque (1) et de la deuxième plaque (2) et dans laquelle une troisième zone d'aboutement (11, 11a) de la première plaque (1) et de la deuxième plaque (2), respectivement, s'étend depuis le dessus des éléments de languette et de rainure (3, 4) jusqu'à la première surface. (7a).

4. Connexion selon la revendication 3, dans lequel de la colle est appliquée entre la première et la deuxième plaque (1, 2) au moins dans la troisième zone d'aboutement (13, 13a).

5. Connexion selon l'une quelconque des revendications précédentes, dans lequel de la colle est appliquée au moins entre les éléments de rainure et languette (3, 4).

6. Assemblage selon l'une quelconque des revendications précédentes, dans lequel une pluralité d'éléments de languette (3) et d'éléments de rainure (4) forment la connexion entre la première et la deuxième plaque (1, 2).

7. Connexion selon l'une quelconque des revendications précédentes, dans laquelle les éléments à rainure et languette (3, 4) s'étendent sur au moins 15 % jusqu'à 85 % de l'épaisseur des première et deuxième plaques (1, 2).

8. Connexion selon l'une quelconque des revendications précédentes, dans laquelle les éléments de rainure et de languette (3, 4) comprennent chacun un rétrécissement (11) et une zone large (12), la zone large (12) comprenant la première zone d'aboutement (9, 9a) et la partie rétrécie comprenant la deuxième zone d'aboutement (10, 10a).

9. Procédé pour fournir un ensemble d'une première et d'une deuxième plaque (1, 2) afin de former une connexion entre lesdites première et deuxième plaques, lesdites première et deuxième plaques étant fabriquées à partir de bois ou de matériau dérivé du bois et ayant une épaisseur et une première surface et une deuxième surface (7a, 7b), lesdites première et deuxième surfaces s'étendant dans un niveau XY et dans lequel
- en usine, un élément de languette (3) est créé sur un premier bord (5) de la première plaque (1), ledit élément de languette (3) dépassant de la première plaque (1),
- un élément de rainure (4) est usiné dans la deuxième plaque (2), s'étendant depuis un premier bord (6) de la deuxième plaque dans ladite deuxième plaque, mais laissant la première surface de la deuxième plaque intacte, lesdits éléments de languette et de rainure (3, 4) s'étendant depuis une deuxième surface (7b) sur une partie de l'épaisseur des première et deuxième plaques (1, 2), dans lequel
- ledit élément de languette (3) est conçu pour s'engager avec ledit élément de rainure (4), dans lequel
- ledit élément de languette (3) et ledit élément de rainure (4) comprennent chacun une première zone d'aboutement (9, 9a) s'étendant parallèlement à un axe X et une deuxième zone d'aboutement (10, 10a) s'étendant parallèlement à un axe Y,
- lesdites première et deuxième plaques (1, 2) comprenant un élément de languette et un élément de rainure (3, 4) sont livrées sur un lieu de montage et où les plaques sont collées ensemble sur le lieu de montage.

10. Procédé selon la revendication 9, dans lequel la colle est fournie avec l'ensemble comprenant les première et deuxième plaques (1, 2).

11. Procédé selon la revendication 9 ou 10, dans lequel la colle est appliquée au moins dans la troisième zone d'aboutement (11, 11a).

12. Procédé selon l'une des revendications 9 à 11, dans lequel la colle est appliquée au moins dans les première et deuxième zones d'aboutement (9, 9a ; 10, 10a).

13. Procédé selon l'une des revendications 9 à 12, dans lequel la première plaque et la deuxième plaque (1, 2) de l'ensemble sont assemblées en plaçant l'élément de rainure (4) de la deuxième plaque au-dessus de l'élément de languette (3) de la première plaque (1), puis en abaissant la deuxième plaque (2) jusqu'à ce que les éléments de languette et de rainure (3, 4) s'emboîtent et que la première plaque (1) et la deuxième plaque (2) soient alignées dans le niveau XY.
